# FASCICULE DE BREVET EUROPEEN

(11) **EP 1 047 580 B1**
(45) Date de publication et mention de la délivrance du brevet: **29.03.2006**
(21) Numéro de dépôt: 99900928.5
(22) Date de dépôt: 15.01.1999
(51) Int. Cl.: B60R 21/18

(54) **EQUIPEMENT DE SECURITE POUR LA PROTECTION D'UN PASSAGER D'UN VEHICULE AUTOMOBILE COMPORTANT UNE CEINTURE DE SECURITE ET UN COUSSIN GONFLABLE ASSOCIE**
KRAFTFAHRZEUGINSASSEN- SICHERHEITS- SCHUTZAUSRÜSTUNG, UMFASSEND EINEN SICHERHEITSGURT UND EINEN ZUGEHÖRIGEN AIRBAG
SAFETY DEVICE FOR PROTECTING A MOTOR VEHICLE PASSENGER, COMPRISING A SEAT BELT AND ASSOCIATED AIRBAG

(30) Priorité: 16.01.1998 FR 9800455
(43) Date de publication de la demande: 02.11.2000
(73) Titulaire: Renault s.a.s., 92100 Boulogne Billancourt (FR)
(72) Inventeur: EVRARD DECOMPS, Laure, F-92370 Chaville (FR); QUILLIEN, David, F-95800 Cergy Saint Christophe (FR); OUDENARD, Laurent, F-92500 Rueil Malmaison (FR)
(86) Numéro de dépôt international: PCT/FR1999/000067
(87) Numéro de publication internationale: WO 1999/036292

(56) Documents cités:
- EP-A- 0 041 368
- DE-A- 2 245 718
- FR-A- 2 171 752
- FR-A- 2 442 058
- FR-A- 2 694 529

## Description

La présente invention concerne un équipement de sécurité pour la protection d'un passager occupant un siège de véhicule automobile.

L'invention concerne plus particulièrement un équipement de sécurité du type comportant, en combinaison, une ceinture de sécurité et un coussin gonflable en cas de collision frontale destiné à équiper un siège de véhicule automobile.

Il a déjà été proposé, par exemple dans les documents US-A-5.062.662 ou US-A-5.597.178, d'associer un coussin gonflable à une ceinture de sécurité.

Dans ces deux documents, le coussin gonflable est porté par la sangle de la ceinture de sécurité et il peut être associé soit au brin ventral de cette dernière soit au brin diagonal, ou baudrier, dans le cas d'une ceinture à trois points de fixation.

Une telle conception permet d'améliorer la protection des passagers en cas de collision, mais elle ne prend pas en compte le fait que les sièges sont souvent occupées par des enfants.

En particulier, tous les systèmes complémentaires de retenue et de maintien des enfants sont actuellement maintenus par la ceinture de sécurité ou, dans l'avenir, seront fixés à des points de fixation défini par la norme internationale "ISOFIX".

La présence éventuelle d'un coussin gonflable a effet frontal rend l'occupation d'un siège un enfant potentiellement dangereuse et il est alors obligatoirement nécessaire de prévoir une possibilité d'inhibition des moyens de gonflage du coussin gonflable lors de l'utilisation de systèmes de retenue et de maintien d'enfants et/ou lors de l'occupation des sièges par des enfants.

Une première solution consiste à prévoir des moyens de détection du poids et/ou de la taille des occupants des sièges mais de tels moyens sont de conception complexe, coûteuse et leur fiabilité n'est pas totale.

Dans le cas des véhicules équipés de points de fixation selon la normale "ISOFIX", des moyens d'inhibition peuvent être associés aux fixations, mais les problèmes mentionnés précédemment pour les véhicules actuels dans lesquels les moyens de retenue des enfants sont maintenus par la ceinture de sécurité ne se trouvent pas résolus.

Afin de remédier à ces inconvénients, l'invention propose un équipement de sécurité pour la protection d'un passager occupant un siège de véhicule automobile, du type comportant :
- une ceinture de sécurité avec une sangle dont les deux extrémités peuvent être ancrées à la structure du véhicule et dont une partie intermédiaire est susceptible d'occuper une position de rangement et une position d'utilisation dans laquelle elle s'étend le long d'une partie du corps du passager ; et
- un coussin, gonflable pour retenir le passager en cas de collision, qui est porté par un support mobile entre une position de rangement et une position d'utilisation dans laquelle le support et le coussin dégonflé s'étendent le long d'une partie du corps du passager ;
caractérisé en ce que le support du coussin gonflable est une bande souple indépendante de la sangle de la ceinture de sécurité et dont une partie intermédiaire, en position d'utilisation du coussin gonflable, s'étend le long d'une partie du corps du passager.

Selon d'autres caractéristiques de l'invention :
- les moyens de gonflage du coussin sont inhibés lorsque le coussin n'est pas en position d'utitisation ;
- la bande de support du coussin gonflable est associée à des moyens, pour sa fixation amovible en position d'utilisation, qui commandent l'inhibition des moyens de gonflage ;
- les moyens de fixation amovible de la bande de support du coussin gonflable comportent un pêne porté par la bande de support qui, en position d'utilisation du coussin, est reçu de manière libérable dans une gâche ;
- la gâche est fixée à la sangle de la ceinture de sécurité ;
- la gâche est fixée à la structure du véhicule ;
- la ceinture de sécurité comporte un pêne d'accrochage de la ceinture de sécurité en position d'utilisation dont le corps est lié à la sangle et qui est prévu pour être reçu de manière libérable dans une gâche fixée à la structure du véhicule, et la gâche associée au pêne de fixation de la bande de support du coussin gonflable est associée au corps du pêne d'accrochage de la ceinture de sécurité ;
- en position de rangement du coussin gonflable, le pêne de fixation porté par la bande de support est reçu dans une gâche fixée à la structure du véhicule ou du siège ;
- en position d'utilisation du coussin gonflable, la bande de support du coussin gonflable s'étend parallèlement au brin ventral de la sangle de la ceinture de sécurité ;
- l'un des points d'ancrage de l'une des extrémités libres de la sangle de la ceinture de sécurité est associé à un dispositif de mise sous-tension de la sangle selon un effort réglable au moins entre une valeur supérieure d'utilisation de la ceinture de sécurité sans le coussin gonflable et une valeur inférieure d'utilisation combinée de la ceinture de sécurité et du coussin gonflable, et le réglage de ladite valeur est effectué automatiquement en fonction de l'état d'inhibition ou d'activation des moyens de gonflage du coussin gonflable.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique en perspective d'un siège de véhicule automobile muni d'un équipement de sécurité conforme aux enseignements de l'invention et sur laquelle la ceinture de sécurité est illustrée en position d'utilisation et le coussin gonflable est illustré en position de rangement ;
- la figure 2 est une vue similaire à celle de la figure 1 sur laquelle la ceinture de sécurité et le coussin gonflable sont illustrés tous les deux en position d'utilisation ; et
- la figure 3 est une vue de détail à plus grande échelle qui représente les moyens de fixation d'une extrémité de la bande de support du coussin gonflable sur la sangle de la ceinture de sécurité.

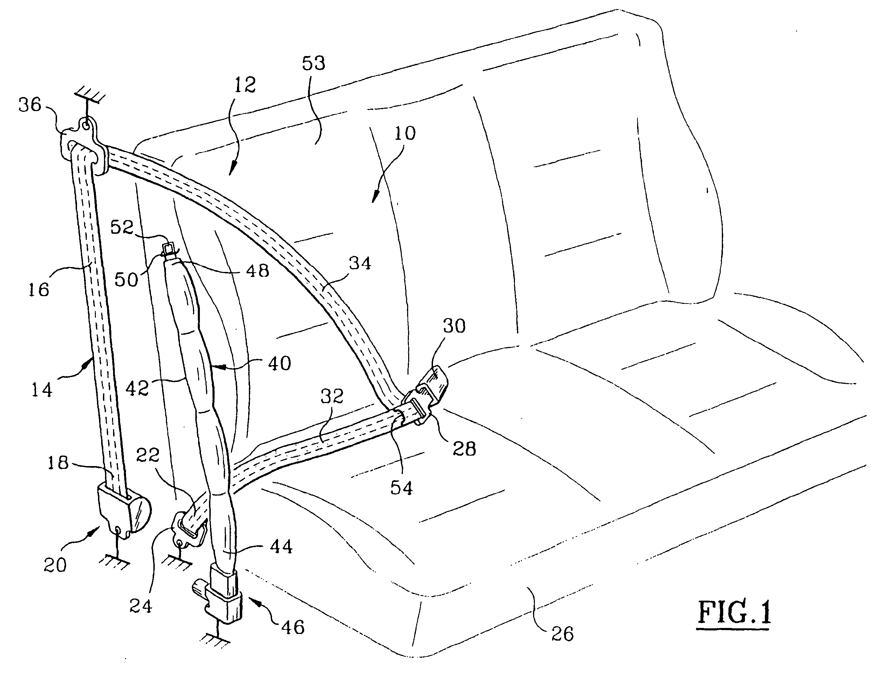

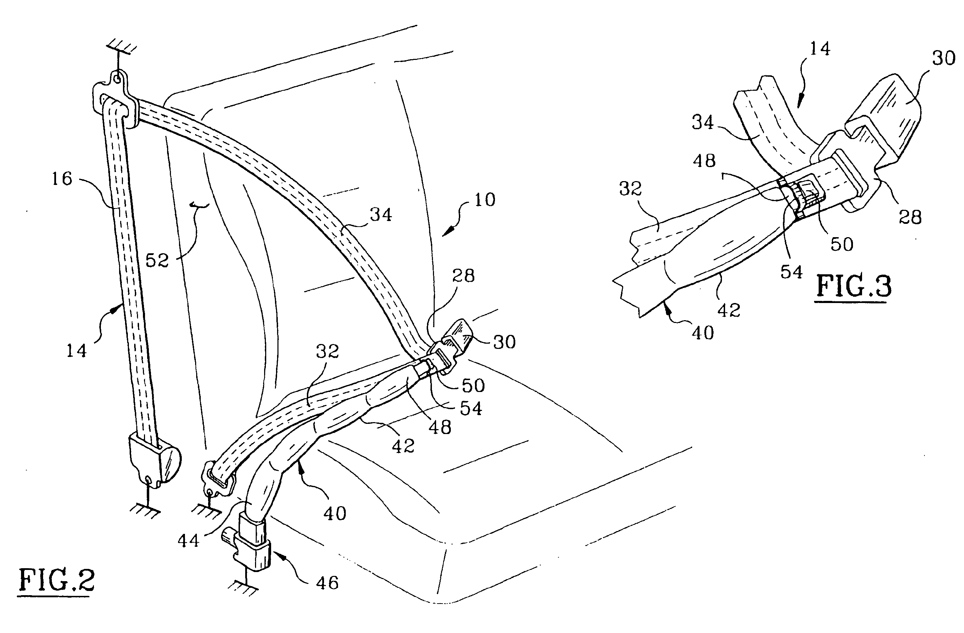

On a représenté schématiquement aux figures 1 et 2 un siège 10 de véhicule automobile, qui est ici une banquette, dont l'une des places est munie d'un équipement de sécurité 12 conforme aux enseignements de l'invention.

D'une manière connue, l'équipement de sécurité 12 comporte une ceinture de sécurité 14 qui est une ceinture de sécurité de conception classique, dite à trois points, qui comporte une sangle 16 dont une première extrémité 18 est ancrée sur la structure du véhicule par l'intermédiaire d'un dispositif 20, de conception connue, de mise sous tension de la ceinture.

L'autre extrémité 22 de la sangle 16 de la ceinture de sécurité 14 est ancrée sur la structure du véhicule en un point fixe 24 qui est ici illustré adjacent à une face latérale de l'élément d'assise 26 du siège 10.

Selon une conception connue, la sangle 16 passe de manière coulissante dans le corps 28 d'un pêne de ceinture qui, dans la position d'utilisation de la ceinture illustrée aux figures 1 et 2, est reçu, de manière libérable, dans une gâche d'accrochage 30 fixé à la structure de la caisse du véhicule.

Grâce à cet agencement, en position d'utilisation de la ceinture de sécurité, un brin ventral 32 de la ceinture s'étend sensiblement horizontalement devant le passager (non représenté) tandis qu'un brin vertical 34 orienté en diagonale, aussi appelé baudrier, s'étend devant le torse du passager en direction d'un point supérieur de renvoi 36.

Conformément aux enseignements de l'invention, l'équipement de sécurité 12 comporte aussi un coussin gonflable 40 qui, à l'état dégonflé illustré sur les figures, se présente globalement sous la forme d'un bandeau allongé.

Conformément aux enseignements de l'invention, le coussin gonflable 40 est indépendant de la ceinture de sécurité 14.

A cet effet, le coussin gonflable 40 comporte une bande de support 42, qui peut être un élément de support indépendant ou qui peut être intégrée à la structure même du coussin gonflable 40, dont l'une des extrémités 44 est fixée à la structure du véhicule.

A proximité de cette extrémité 44, il est prévu un générateur 46 de gonflage du coussin 40 qui, selon une conception connue, est commandé automatiquement par un circuit (non représenté) de commande du gonflage en cas de collision.

L'extrémité libre 48 de la bande 42 est équipée d'un pêne 50 de fixation qui, dans la position de rangement illustrée à la figure 1, est reçu dans une gâche fixe 52 qui est ici représentée comme étant reliée à la structure du dossier 53 du siège 10. A titre de variante non représentée, la gâche 52 peut aussi être fixée à un élément de structure de la caisse du véhicule. -

Dans la position de rangement illustrée à la figure 1, le coussin gonflable 40 s'étend donc sensiblement verticalement le long du bord latéral du dossier 53 du siège 10.

Dans l'exemple illustré sur les figures, le coussin gonflable 40 est prévu pour s'étendre, en position d'utilisation, sensiblement parallèlement et adjacent au bras ventral 32 de la ceinture de sécurité 14, c'est-à-dire en position horizontale.

A cet effet, le brin central 32 de la ceinture de sécurité 34 comporte une gâche fixe 54, de conception identique à celle de la gâche 52, dans laquelle le pêne 50 peut être emboîté élastiquement pour la fixation de l'extrémité libre 48 du coussin gonflable 40.

Conformément à l'une des caractéristiques de l'invention, les moyens de gonflage du coussin sont inhibés lorsque le coussin n'est pas en position d'utilisation, c'est-à-dire lorsque son pêne de fixation 50 n'est pas engagé dans la gâche de fixation 54.

A cet effet, il est par exemple possible de prévoir un commutateur (non représenté sur les figures) dans la gâche 54 qui est relié à l'unité de commande du générateur de gonflage 46. Le commutateur est par exemple du type normalement ouvert et il n'est fermé que lorsque le pêne de fixation 50 est en position dans la boucle 54. A l'état fermé le commutateur transmet un signal d'activation au circuit de commande du générateur 46 de manière que, en cas de collision, le circuit de commande provoque un gonflage instantané du coussin gonflable 40 en position d'utilisation.

Au contraire, lorsque le coussin gonflable 40 n'est pas en position d'utilisation, et qu'il est par exemple dans sa position de rangement illustré à la figure 1, le circuit de commande ne peut pas provoquer le gonflage du coussin gonflable 40.

Selon une autre caractéristique de l'invention, il peut être prévu un témoin visuel dans l'habitacle (non représenté sur les figures) qui indique si les moyens de commande du gonflage du coussin gonflable 40 sont dans un état d'inhibition ou d'activation.

Le coussin gonflable, par exemple au voisinage de son extrémité libre 48, peut être muni de moyens d'indication aux utilisateurs de son mode d'emploi, en indiquant notamment de manière explicite son incompatibilité d'emploi avec les systèmes de retenue pour les enfants tels que des sièges complémentaires et/ou des coussins additionnels.

En cas d'occupation de la place par un enfant, avec notamment des moyens additionnels de retenue de l'enfant, le coussin gonflable ne doit pas être utilisé et il doit occuper de préférence sa position de rangement illustrée à la figure 1, le témoin indiquant alors visuellement aux utilisateurs l'état d'inhibition des moyens de gonflage du coussin gonflable 40.

Une telle conception a bien entendu pour inconvénient qu'un passager adulte occupant la place après un enfant pourrait ne pas fixer à nouveau le coussin gonflable 40 dans sa position d'utilisation illustrée aux figures 2 et 3.

Il est possible de remédier à cet inconvénient en asservissant la valeur de l'effort de maintien exercé par la ceinture en prévoyant par exemple de faire appel à des moyens réglables 20 de mise sous tension de la ceinture de sécurité 14 présentant au moins deux niveaux ou valeurs de réglage de l'effort de retenue exercé par la ceinture.

Selon que les moyens de gonflage du coussin gonflable 40 sont dans leur état d'inhibition ou d'activation, le circuit de commande du gonflage intervient pour asservir la valeur de l'effort de retenue exercé par la ceinture de manière à garantir dans tous les cas un niveau de sécurité suffisant pour le passager en cas de collision.

L'invention n'est pas limitée au mode de réalisation qui vient d'être décrit. Il est par exemple possible de prévoir que la gâche 54 de fixation en position d'utilisation de l'extrémité libre 48 du coussin gonflable 40 soit reliée à la structure du véhicule ou intégrée au corps du pêne d'accrochage de la ceinture de sécurité 14 en position d'utilisation.

L'invention n'est pas non plus limitée au cas où certains des points d'ancrage et d'accrochage de la ceinture de sécurité 14 et du coussin gonflable 40 appartiennent à la structure de la caisse du véhicule, tous ces points pouvant être intégrés au siège proprement dit et/ou à un caisson inférieur du siège.

L'invention trouve à s'appliquer pour l'équipement de sécurité de toutes les places d'un véhicule automobile avant ou arrière, et quelle que soit l'orientation de ces places.

L'invention trouve aussi à s'appliquer dans le cas d'un coussin gonflable amovible d'orientation globalement en diagonale, c'est-à-dire adjacent au brin 34 de la ceinture de sécurité 14.

## Revendications

1. Equipement de sécurité (12) pour la protection d'un passager occupant un siège (10) de véhicule automobile, du type comportant :
- une ceinture de sécurité (14) avec une sangle (16) dont les deux extrémités (18, 22) peuvent être ancrées à la structure du véhicule et dont une partie intermédiaire (32, 34) est susceptible d'occuper une position de rangement et une position d'utilisation dans laquelle elle s'étend le long d'une partie du corps du passager ; et
- un coussin (40), gonflable pour retenir le passager en cas de collision, qui est porté par un support (42) mobile entre une position de rangement et une position d'utilisation dans laquelle le support (42) et le coussin (40) dégonflé s'étendent le long d'une partie du corps du passager ;
**caractérisé en ce que** le support (42) du coussin gonflable est une bande souple indépendante de la sangle (16) de la ceinture de sécurité (14) et dont une partie intermédiaire, en position d'utilisation du coussin gonflable, s'étend le long d'une partie du corps du passager.

2. Equipement selon la revendication précédente, **caractérisé en ce que** les moyens (46) de gonflage du coussin (40) sont inhibés lorsque le coussin n'est pas en position d'utilisation.

3. Equipement selon la revendication précédente, **caractérisé en ce que** la bande de support (42) du coussin gonflable (40) est associée à des moyens (50, 54), pour sa fixation amovible en position d'utilisation, qui commandent l'inhibition des moyens de gonflage.

4. Equipement selon la revendication précédente, **caractérisé en ce que** les moyens de fixation amovible de la bande (42) de support du coussin gonflable (40) comportent un pêne (50) porté par la bande de support (42, 48) qui, en position d'utilisation du coussin (40), est reçu de manière libérable dans une gâche (54).

5. Equipement selon la revendication 4, **caractérisé en ce que** la gâche (54) est fixée à la sangle (16, 32) de la ceinture de sécurité.

6. Equipement selon la revendication 4, **caractérisé en ce que** la gâche est fixée à la structure du véhicule.

7. Equipement selon la revendication 4, **caractérisé en ce que** la ceinture de sécurité (12) comporte un pêne (28) d'accrochage de la ceinture de sécurité en position d'utilisation dont le corps est lié à la sangle (16) et qui est prévu pour être reçu de manière libérable dans une gâche (30) fixée à la structure du véhicule, et **en ce que** la gâche associée au pêne de fixation de la bande de support du coussin gonflable est associée au corps du pêne d'accrochage de la ceinture de sécurité.

8. Equipement selon l'une quelconque des revendications 4 à 7, **caractérisé en ce que**, en position de rangement du coussin gonflable, le pêne de fixation (50) porté par la bande de support (42, 48) est reçu dans une gâche (52) fixée à la structure du véhicule ou du siège (10, 53).

9. Equipement selon l'une quelconque des revendications précédentes, **caractérisé en ce que**, en position d'utilisation du coussin gonflable (40), la bande de support (42) du coussin gonflable s'étend parallèlement au brin ventral (32) de la sangle de la ceinture de sécurité (14).

10. Equipement selon l'une quelconque des revendications précédentes, **caractérisé en ce que** l'un des points d'ancrage de l'une des extrémités libres (18) de la sangle (16) de la ceinture de sécurité (14) est associé à un dispositif (20) de mise sous-tension de la sangle selon un effort réglable au moins entre une valeur supérieure d'utilisation de la ceinture de sécurité sans le coussin gonflable et une valeur inférieure d'utilisation combinée de la ceinture de sécurité et du coussin gonflable, et **en ce que** le réglage de ladite valeur est effectué automatiquement en fonction de l'état d'inhibition ou d'activation des moyens (46) de gonflage du coussin gonflable.

## Claims

1. A safety arrangement (12) for the protection of a passenger occupying a motor vehicle seat (10), of the type comprising:
- a safety belt (14) with a webbing (16) of which the two ends (18, 22) can be anchored to the structure of the vehicle and of which an intermediate portion (32, 34) is capable of occupying a storage position and a use position in which it extends along a part of the body of the passenger; and
- an inflatable airbag (40) for restraining the passenger in the event of a collision, which airbag is carried by a support (42) movable between a storage position and a use position in which the support (42) and the deflated airbag (40) extend along a part of the body of the passenger;
**characterised in that** the suppport (42) of the inflatable airbag is a flexible band which is independent of the webbing (16) of the safety belt (14) and of which an intermediate portion extends along a part of the body of the passenger in the position of use of the inflatable airbag.

2. An arrangement according to the preceding claim **characterised in that** the means (46) for inflating the airbag (40) are disabled when the airbag is not in the position of use.

3. An arrangement according to the preceding claim **characterised in that** the support band (42) of the inflatable airbag (40) is associated with means (50, 54) for releasable fixing thereof in the position of use, which control disabling of the inflation means.

4. An arrangement according to the preceding claim **characterised in that** the means for releasable fixing of the support band (42) of the inflatable airbag (40) comprise a latch (50) carried by the support band (42, 48) and which, in the position of use of the airbag (40), is received releasably in a keeper (54).

5. An arrangement according to claim 4 **characterised in that** the keeper (54) is fixed to the webbing (16, 32) of the safety belt.

6. An arrangement according to claim 4 **characterised in that** the keeper is fixed to the structure of the vehicle.

7. An arrangement according to claim 4 **characterised in that** the safety belt (12) comprises a latch (28) for engaging the safety belt in the position of use, of which the body is connected to the webbing (16) and which is intended to be releasably received in a keeper (30) fixed to the structure of the vehicle, and that the keeper associated with the latch for fixing the support band of the inflatable airbag is associated with the body of the latch for engagement of the safety belt.

8. An arrangement according to any one of claims 4 to 7 **characterised in that** in the storage position of the inflatable airbag the fixing latch (50) carried by the support band (42, 48) is received in a keeper (52) fixed to the structure of the vehicle or of the seat (10,53).

9. An arrangement according to any one of the preceding claims **characterised in that** in the position of use of the inflatable airbag (40) the support band (42) of the inflatable airbag extends parallel to the lap strap portion (32) of the webbing of the safety belt (14).

10. An arrangement according to any one of the preceding claims **characterised in that** one of fhe anchorage points of one of the free ends (18) of the webbing (16) of the safety belt (14) is associated with a device (20) for tensioning the webbing with a force which is regulatable at least between an upper value of use of the safety belt without the inflatable airbag and a lower value of combined use of the safety belt and the inflatable airbag, and that regulation of said value is effected automatically in dependence on the state of disablement or activation of the means (46) for inflation of the inflatable airbag.

## Patentansprüche

1. Sicherheitseinrichtung (12) für den Schutz eines Insassen, der sich in einem Sitz (10) eines Kraftfahrzeugs befindet, von der Art, welche aufweist:
- einen Sicherheitsgurt (14) mit einem Gurt (16), dessen zwei Enden (18, 22) an der Struktur des Fahrzeugs befestigt werden können und von dem ein Zwischenteil (32, 34) fähig ist, eine Aufbewahrungsposition und eine Verwendungsposition einzunehmen, in welcher er sich entlang eines Teils des Körpers des Insassen erstreckt; und
- einen Airbag (40) zum Zurückhalten des Insassen im Falle einer Kollision, welcher durch einen Träger (42) getragen wird, der beweglich ist zwischen einer Aufbewahrungsposition und einer Verwendungsposition, in welcher der Träger (42) und der entleerte Airbag (40) sich entlang eines Teils des Körpers des Insassen erstrecken;
**dadurch gekennzeichnet, dass** der Träger (42) des Airbags ein nachgiebiges Band unabhängig vom Gurt (16) des Sicherheitsgurts (14) ist und von dem sich ein Zwischenteil in Verwendungsposition des Airbags entlang eines Teils des Körpers des Insassen erstreckt.

2. Einrichtung nach dem vorangegangenen Anspruch, **dadurch gekennzeichnet, dass** die Aufblasmittel (46) des Airbags (40) gehemmt sind, wenn der Airbag nicht in Verwendungsposition ist.

3. Einrichtung nach dem vorangegangenen Anspruch, **dadurch gekennzeichnet, dass** das Band des Trägers (42) des Airbags (40) Mitteln (50, 54) hinzugefügt ist für seine lösbare Befestigung in Verwendungsposition, welche die Hemmung der Aufblasmittel steuern.

4. Einrichtung nach dem vorangegangenen Anspruch, **dadurch gekennzeichnet, dass** die Mittel zur lösbaren Befestigung des Bandes (42) des Trägers des Airbags (40) einen Riegel (50) aufweisen, der durch das Band des Trägers (42, 48) getragen wird, weicher in Verwendungsposition des Airbags (40) auf freigebbare Art und Weise in einer Schließkappe (54) aufgenommen ist.

5. Einrichtung nach Anspruch 4; **dadurch gekennzeichnet, dass** die Schließkappe (54) an dem Gurt (16, 32) des Sicherheitsgurts befestigt ist.

6. Einrichtung nach Anspruch 4, **dadurch gekennzeichnet, dass** die Schließkappe an der Struktur des Fahrzeugs befestigt ist.

7. Einrichtung nach Anspruch 4, **dadurch gekennzeichnet, dass** der Sicherheitsgurt (12) einen Riegel (28) zur Befestigung des Sicherheitsgurts in Verwendungsposition aufweist, dessen Körper mit dem Gurt (16) verbunden ist und welcher vorgesehen ist, auf freigebbare Art und Weise in einer Schließkappe (30) aufgenommen zu werden, die an der Struktur des Fahrzeugs befestigt ist, und dass die Schließkappe, welche dem Befestigungsriegel des Bandes des Trägers des Airbags hinzugefügt ist, dem Körper des Befestigungsriegels des Sicherheitsgurts hinzugefügt ist.

8. Einrichtung nach irgendeinem der Ansprüche 4 bis 7, **dadurch gekennzeichnet, dass** in Aufbewahrungsposition des Airbags der Befestigungsriegel (50), der durch das Band des Trägers (42, 48) getragen wird, in einer Schließkappe (52) aufgenommen ist, die an der Struktur des Fahrzeugs oder des Sitzes (10, 53) befestigt ist.

9. Einrichtung nach irgendeinem der vorangegangenen Ansprüche, **dadurch gekennzeichnet, dass** in Verwendungsposition des Airbags (40) das Band des Trägers (42) des Airbags sich parallel zum Bauchstück (32) des Gurts des Sicherheitsgurts (14) erstreckt.

10. Einrichtung nach irgendeinem der vorangegangenen Ansprüche, **dadurch gekennzeichnet, dass** der eine der Verankerungspunkte des einen der freien Enden (18) des Gurts (16) des Sicherheitsgurts (14) einer Vorrichtung (20) zum unter Spannung setzen des Gurtes hinzugefügt ist, gemäß einer Kraft, die mindestens zwischen einem oberen Wert einer Verwendung des Sicherheitsgurts ohne den Airbag und einem unteren Wert einer kombinierten Verwendung des Sicherheitsgurts und des Airbags einstellbar ist, und dass die Einstellung des Werts automatisch in Abhängigkeit von dem Zustand einer Hemmung oder einer Aktivierung der Aufblasmittel (46) des Airbags ausgeführt wird.
